# DEMANDE DE BREVET EUROPEEN

(11) **EP 2 285 042 A1**
(43) Date de publication de la demande: **16.02.2011**
(21) Numéro de dépôt: 09305657.0
(22) Date de dépôt: 07.07.2009
(51) Int. Cl.: H04L 9/32, G06F 21/00

(54) **Module logiciel de sécurisation utilisant le chiffrement du haché d'un mot de passe concaténé avec une graine**

(71) Demandeur: Gemalto SA, 92190 Meudon (FR)
(72) Inventeur: Fournier, Jacques, 13008, Marseille (FR)

(57) **Abrégé**

L'invention présente un procédé de gestion d'un module de sécurité virtuel contenant des données sensibles, embarqué dans une clé de stockage, aussi appelé clé intelligente.

Ce module virtuel assoit sa sécurité sur un mécanisme de re-chiffrement régulier de son contenu avec une clé différente à chaque fois.

## Description

L'invention concerne un module de sécurisation logiciel.

L'invention porte en particulier sur la gestion de données sensibles dans un dispositif électronique mobile.

Les dispositifs électroniques mobiles sont en pleine mutation. En effet, leur capacité de stockage évolue, leur puissance de calcul par unité de taille augmente de même que leur encombrement diminue.

Une clé intelligente, est généralement composée d'au moins une mémoire de masse non volatile, une mémoire de travail, un microprocesseur et un contrôleur de communication. Le contrôleur de communication ayant entre autre pour mission de gérer les accès aux données contenues dans la mémoire de masse.

Une évolution des besoins techniques vers plus de sécurité a permis la naissance d'un nouveau type de clé intelligentes, généralement appelées SmartToken, qui, en plus des composants précités, ont un accès à un module de sécurité. Ce module de sécurité peut être intégré dans un ou plusieurs composants, et ainsi être partie intégrante du SmartToken, ou bien être un module indépendant, de type carte à puce par exemple, et être associé au SmartToken, par exemple inséré dans celui-ci.

Une troisième solution peut consister en un dispositif indépendant, de type carte à puce, accessible par le SmartToken tout en étant physiquement hors de ce dernier. Dans le SmartToken, c'est généralement le contrôleur du SmartToken qui gère les accès au module sécurisé, en plus de la gestion de l'accés à la mémoire de masse

Le module de sécurité permet de conserver, avec un niveau optimal de sécurité, toute donnée sensible, notamment des clés cryptographiques ou des mots de passe.

L'inconvénient majeur de ces SmartToken, est leur coût, principalement lié à la présence du module de sécurité.

La présente propose de virtualiser le module de sécurité, et de l'embarquer dans une clé intelligente dont les seuls composants indispensables sont un contrôleur et une mémoire de masse. Il devient ainsi possible d'utiliser une telle clé intelligente en lieu et place d'un SmartToken afin de fournir les mêmes services de sécurité que ce dernier.

Ce module virtuel assoit sa sécurité sur un mécanisme de re-chiffrement régulier de son contenu avec une clé différente a chaque fois.

Pour se faire, l'invention décrit un procédé de gestion de données sécurisées, comportant au moins un premier dispositif électronique et un second dispositif électronique portable dit ST incluant une mémoire de travail, un microprocesseur, et une mémoire non volatile, cette mémoire non volatile comporte en outre un ensemble de données sensibles chiffrées CryptData, un algorithme cryptographique symétrique SYM, une valeur numérique V1, ainsi que un module logiciel appelé DongleManager, **caractérisé en ce que** le procédé comprend au moins les étapes de:
- génération d'une clé de déchiffrement CurrentKey, à partir de la valeur V1 et d'un mot de passe MDP.
- déchiffrement de la donnée sensible chiffrée grâce à l'algorithme SYM et la clé CurrentKey pour obtenir une donnée sensible déchiffrée ClearData
- re-chiffrement de la donnée sensible ClearData
- utilisation de tout ou partie de la donnée ClearData.

Les données en clair ClearData, peuvent contenir en outre, un mot de passe MDP'.

Selon un mode d'implémentation, dans une étape préliminaire, les données en clair ClearData, sont chiffrées, avec l'algorithme SYM, et une clé composée d'une combinaison du mot de passe MDP et de la valeur V1.

Selon un mode de réalisation, l'étape de génération peut comporter en outre les étapes de :
- envoie de la valeur V1 au DongleManager
- association, grâce à application d'une première fonction mathématique FAsso par le DongleManager, d'un mot de passe MDP et de la valeur V1 pour obtenir mot de passe dit parfait PerfectMDP,
- extraction d'une signature HPwd, par application d'une seconde fonction mathématique FXtract au mot de passe parfait PerfectMDP par la DongleManager, et envoie de la signature HPwd au dispositif ST,
- dérivation, par ledit dispositif ST, de la clé courante CurrentKey par application d'une troisième fonction mathématique FDeriv, à la signature HPwd.

Selon le mode d'implémentation, le mot de passe peut être obtenu par exemple, par le DongleManager, d'un utilisateur au travers d'une interface d'entrée, ou bien d'un dispositif électronique tiers, communicant avec le DongleManager.

La fonction FAsso peut être par exemple une concaténation.

La fonction FXtract peut être par exemple une fonction non-inversible, ou bien une fonction de Hachage.

Le procédé peut comprendre en outre, entre les étapes de déchiffrement et de re-chiffrement, une étape de vérification, au cours de laquelle une valeur témoin est recherchée dans les données ClearData, et le procédé ne se poursuit que si cette valeur témoin est correctement trouvée.

Selon un mode de réalisation, l'étape de re-chiffrement de la donnée ClearData peut comprendre en outre les étapes de :
- génération d'une nouvelle valeur V2
- association, par application de la fonction mathématique FAsso, du mot de passe MDP' et de la valeur V2 pour obtenir mot de passe dit parfait PerfectMDP'
- chiffrement des données ClearData avec le nouveau mot de passe parfait PerfectMDP' et l'algorithme SYM pour obtenir un nouveau chiffré NewCryptData
- enregistrement du nouveau chiffré NewCryptData, et de la valeur V2 dans la mémoire non volatile du dispositif électronique ST.

A cette étape de vérification peut être associé une étape d'effacement de la valeur V1 et de du chiffré CryptData dans la mémoire non volatile du dispositif ST.

La valeur V2 peut être une valeur aléatoire.

D'autres caractéristiques et avantages de l'invention ressortiront clairement de la description qui en est faite ci-après, à titre indicatif et nullement limitatif, en référence aux figures annexées, parmi lesquelles :
- la figure 1 représente un système contenant l'invention
- la figure 2 représente un diagramme de séquence de mise en en oeuvre de l'invention.

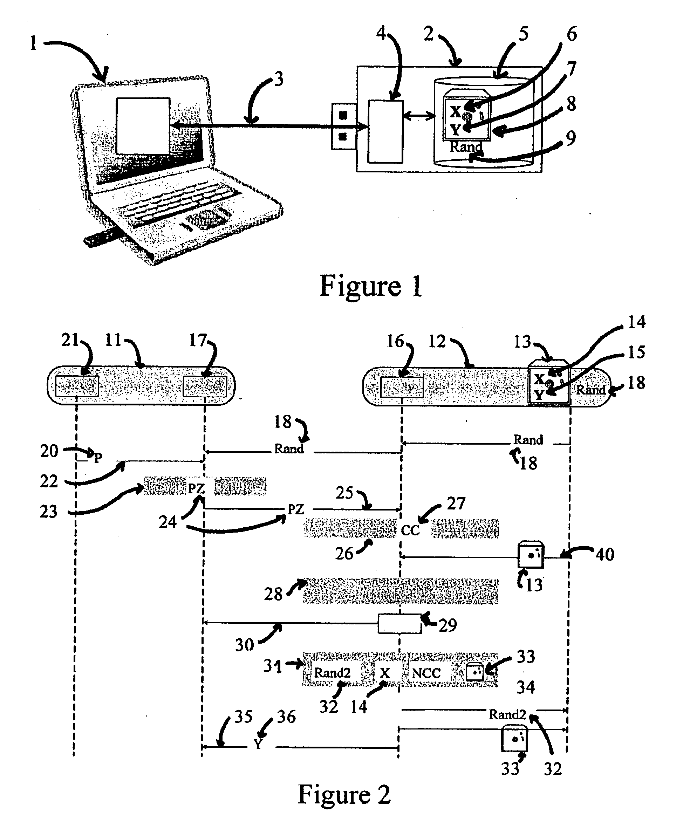

La figure 1 illustre la mise en oeuvre de l'invention dans un système comportant un dispositif électronique 1, représenté par un ordinateur, ainsi qu'une clé intelligente 2.

Dans un fonctionnement normal du système, l'ordinateur 1 et la clé 2 communiquent au travers d'un canal de communication illustré par la doubler flèche 3. Ce canal peut être réalisé par n'importe quel protocole de communication informatique.

Ces protocoles peuvent être filaire tel que T-carrier (T1, T3, etc.), RS232, Ethernet, IDE, ... ou bien sans fil tel que infrarouge, wifi, Bluetooth, RFID, ...

Dans un mode préféré d'implémentation de l'invention, la clé et l'ordinateur communiquent au travers du protocole USB (« Universal Serial Bus » en anglais). L'utilisation de ce protocole permet à la clé 2 d'être aisément connectée à un ordinateur individuel 1, et reconnue par lui (à travers des logiciels bas-niveau appelés communément "drivers" qui sont présents dans la majorité des systèmes d'exploitations).

La clé intelligente 2 comporte un contrôleur 4, et une mémoire de masse 5. Dans cette mémoire de masse 5 sont enregistrés au moins deux éléments :
- une valeur 6 appelée Rand
- une donnée chiffrée 7

Ce couple de données représente un module de sécurité virtuel 8. Son rôle va être comparable au module de sécurité matériel des SmartToken.

En effet, la donnée chiffrée peut être illustrée comme un coffre fort 6, fermé grâce à un chiffrement cryptographique. Elle contient, entre autre, une ou plusieurs données sensibles qui peuvent être utilisées par un programme tiers.

Ces données peuvent être, par exemple des clés cryptographiques.

Ainsi, comme illustré dans la figure 2, lorsque un programme demande un accès à ces clés, le module de sécurité virtuel doit être ouvert, et les clés extraites.

Dans une étape préalable à l'implémentation de l'invention, le module de sécurité virtuel est créé en suivant les étapes ci-après :
- Création d'une clé de chiffrement par l'association d'un mode de passe et d'une valeur numérique. Le mot de passe est celui qui sera exigé ultérieurement pour accéder aux données sensibles, la valeur numérique a comme objectif de faire varier la clé de chiffrement afin d'éviter les attaques par rejeu. Dans un mode préféré d'implémentation de l'invention, cette valeur est un nombre aléatoire.
- Association d'au moins une donnée sensible et du mot de passe pour créer un agrégat. Cette étape permet de définir l'ensemble des données qui doivent être protégées. Ces données peuvent être des clés, des certificats, mais également des données au sens plus général du terme. Le mot de passe est associé à ces données afin de pouvoir l'utiliser dans la suite du procédé. Ces données sont associées de manière à créer un objet, au sens informatique du terme, qui puisse être chiffré. Cet objet, appelé agrégat, peut être une simple concaténation des données précitées, ou bien une structure de données plus complexe, ou bien tout autre moyen informatique permettant d'associer des données entre elles.
- Chiffrement de cet agrégat grâce à un algorithme à clé secrète SYM, et la clé de chiffrement pour obtenir une donnée chiffrée.
- Enregistrement de la donnée chiffrée (aussi appelé « coffre-fort ») ainsi que de la valeur numérique dans une mémoire non volatile de la clé intelligente.

Le module de sécurité virtuel est ainsi créé.

Dans le cadre de la mise en oeuvre de l'invention, le « coffre fort » contient, en plus de cette ou ces données sensibles, le mot de passe 15 utilisé pour son chiffrement.

L'usage de ce mot de passe sera mis en évidence dans la suite du procédé.

L'usage de ce module de sécurité se fait sur demande, le plus souvent d'un élément logiciel tiers, par exemple, lorsqu'un élément logiciel demande à accéder à une des données sensibles contenues dans le module de sécurité.

La figue 2 illustre le cas où la clé intelligente 12 contenant le module de sécurité virtuel 13 est insérée dans un ordinateur 11, cet ordinateur comportant un élément logiciel qui demande à accéder, par exemple à des clefs 14 contenues dans le module de sécurité virtuel.

Il est fréquent que le contrôleur 16 de la clé intelligente 12 demande à avoir accès à tout ou partie du contenu du module de sécurité virtuel 13.

Un module logiciel 17, appelé « Dongle Manager » (ou « Gestionnaire de Clef » en français) est envoyé, depuis la clé intelligente, sur l'ordinateur, et exécuté par lui. Ce Dongle Manager a pour mission d'assurer une interface entre « l'utilisateur », l'ordinateur, et la clé intelligente. Son rôle est de palier le fait qu'à ce jour, les clés intelligentes les plus répandues ne présentent pas d'interfaces d'entrées / sorties permettant à l'utilisateur d'entrer son mot de passe directement. Dans le cas où nous serions en présence d'une clé présentant de telles interfaces d'entrée-sortie, l'invention s'appliquerait avantageusement sans la présence du Dongle Manager.

Une fois la requête reçue par la clé intelligente, la valeur 18 Rand est envoyée 19 au Dongle Manager 17. Celui-ci obtient un mot de passe candidat 20. Dans l'illustration de la figure 2, c'est l'utilisateur 21 qui fournit 22 lui même son mot de passe, dans une autre solution, le mot de passe peut provenir d'un autre dispositif électronique, par exemple d'une carte à puce. Le Dongle Manager associe 23 le mot de passe candidat 20 et la valeur 18 Rand. Dans un mode préféré de l'invention, cette association se fait par l'usage d'une fonction de hachage, sur le concaténé du mot de passe candidat et de la valeur Rand.

La concaténation consiste en une juxtaposition de plusieurs valeurs, c'est une opération couramment utilisée en informatique pour mettre, bout à bout, plusieurs valeurs.

Toute autre solution d'association est applicable, une préférence forte sera apportée aux solutions ne permettant pas, par étude de l'association sus-citée, de retrouver la valeur du mot de passe candidat, ni celle de la valeur Rand.

Dans notre illustration, le résultat de la fonction de hachage sera nommé HashPWD 24.

Cette valeur 24 est transmise 25, depuis le Dongle manager 17, au contrôleur 16 de la clé intelligente 12.

Celui-ci peut, comme illustré dans l'étape 26 de la figure 2, appliquer une fonction mathématique supplémentaire KDF sur cette valeur 24 HashPWD pour obtenir une valeur de clé courante 27.

Cette clé 27 est utilisée pour déchiffrer 28 le module de sécurité virtuel 13 grâce à un algorithme cryptographique à clé secrète (aussi dit symétrique).

Une étape optionnelle, mais dont l'usage est fortement recommandé, consiste en la vérification des informations obtenues par ce déchiffrement. Cette vérification peut se faire par exemple en recherchant une valeur prédéfinie dans les informations déchiffrées. Cette information est avantageusement la valeur Rand. Dans ce cas, il faut que cette valeur Rand ait été insérée dans le module de sécurité virtuel à sa création, et que, ultérieurement, les éventuelles évolutions de la valeur Rand y soient mises à jour.

Une autre méthode consiste en la lecture du mot de passe, dit mot de passe de référence, stocké dans le module de sécurité virtuel. Ce mot de passe est associé à la valeur Rand de la même manière que celle utilisée par le Dongle Manager, dans notre exemple une fonction de hachage. Le contrôleur obtient ainsi une valeur Ref_Hash, illustrant l'association du mot de passe de référence et de la valeur Rand. Si la valeur Ref_Hash est identique à la valeur HashPWD, cela prouve que le mot de passe candidat est bien identique au mot de passe de référence.

La suite du procédé peut être conditionnée par le résultat de cette vérification. Dans un mode préféré d'implémentation de l'invention, le procédé est arrêté 30 en cas d'échec de la vérification. Dans d'autres modes d'implémentation, l'échec peut être enregistré, et le procédé poursuivi, un traitement ultérieur pouvant survenir. Une autre méthode peut consister en une dégradation des services fournis en cas d'échec, par exemple une limitation dans les services offerts.

Nous noterons que l'échec de la vérification signifie que les informations sensibles lues sont erronées car déchiffrées avec une clé invalide.

Une fois les données sensibles déchiffrées, et avant leur utilisation, le procédé décrit un re_verrouillage 31 du module de sécurité virtuel.

Ce re_verrouillage se fait en obtenant une nouvelle valeur 32 Rand2. Cette valeur peut être obtenue par un calcul ou lue dans une mémoire. Dans un mode préféré d'implémentation de l'invention, cette valeur est générée par une générateur de nombres aléatoires.

Cette valeur 32 Rand2 est associée au mot de passe de référence 15 de la même manière 23 que celle définie précédemment pour créer HashPWD (une fonction de hachage dans notre exemple), pour obtenir une valeur HashNew. Si une fonction supplémentaire KDF est utilisée, celle-ci est appliquée à la valeur HashNew pour obtenir une clé, dite nouvelle clé.

Les données sensibles déchiffrées, et éventuellement modifiées, ainsi que le mot de passe de référence, sont re-chiffrées grâce à l'algorithme symétrique utilisé ci-avant, et la nouvelle clé, pour obtenir une nouvelle donnée chiffrée.

Cette nouvelle donnée chiffrée 33 est enregistrée, avec la valeur 32 Rand2 dans la clé intelligente 12.

Le module de sécurité est dorénavant re-verrouillé.

Les données sensibles déchiffrées sont maintenant utilisées, comme demandé par l'élément logiciel tiers ayant requis cet usage.

## Revendications

1. Procédé de gestion de données sécurisées, comportant au moins un premier dispositif électronique (1, 11) et un second dispositif électronique portable (2, 12) dit ST incluant une mémoire de travail, un microprocesseur, et une mémoire non volatile (5), ladite mémoire non volatile comporte en outre un ensemble de données sensibles (7) chiffrées CryptData (8), un algorithme cryptographique symétrique SYM, une valeur numérique V1 (9), ainsi que un module logiciel appelé DongleManager (17),
**caractérisé en ce que** le procédé comprend au moins les étapes de:
- génération d'une clé de déchiffrement CurrentKey, à partir de la valeur V1 et d'un mot de passe MDP.
- déchiffrement de ladite donnée sensible chiffrée grâce audit algorithme SYM et à ladite clé CurrentKey pour obtenir une donnée sensible déchiffrée ClearData
- re-chiffrement de la donnée sensible ClearData
- utilisation de tout ou partie de ladite donnée ClearData.

2. Procédé la revendication 1, **caractérisé en ce que**, les dites données en clair ClearData, contiennent en outre, un mot de passe MDP' (6).

3. Procédé l'une des revendications 1 ou 2, **caractérisé en ce que**, dans une étape préliminaire, les dites données en clair ClearData (6, 7), sont chiffrées, avec ledit algorithme SYM, et une clé composée d'une combinaison dudit mot de passe MDP (6) et de ladite valeur V1 (9).

4. Procédé l'une des revendications 1 ou 2, **caractérisé en ce que** l'étape de génération comporte en outre les étapes de :
- envoie de la valeur V1 (18) audit DongleManager (17)
- association, par application d'une première fonction mathématique FAsso par ledit DongleManager (17), d'un mot de passe MDP (20) et de ladite valeur V1 (18) pour obtenir mot de passe dit parfait PerfectMDP,
- extraction d'une signature HPwd (24), par application d'une seconde fonction mathématique FXtract audit mot de passe parfait PerfectMDP par ledit DongleManager, et envoie de ladite signature HPwd (24) audit dispositif ST (12)
- dérivation, par ledit dispositif ST, de la clé courante CurrentKey (27) par application d'une troisième fonction mathématique FDeriv, à ladite signature HPwd.

5. Procédé selon l'une quelconque des revendications 1 à 4, **caractérisé en ce que** ledit mot de passe (20) est obtenu par ledit DongleManager (17), d'un utilisateur (21) au travers d'une interface d'entrée.

6. Procédé selon l'une quelconque des revendications 1 à 4, **caractérisé en ce que** ledit mot de passe (20) est obtenu par ledit DongleManager, d'un dispositif électronique tiers, communicant avec ledit DongleManager.

7. Procédé selon l'une quelconque des revendications 1 à 6, **caractérisé en ce que** ladite fonction FAsso est une concaténation.

8. Procédé selon l'une quelconque des revendications 1 à 7, **caractérisé en ce que** ladite fonction FXtract est une fonction non-inversible.

9. Procédé selon la revendication 8, **caractérisé en ce que** ladite fonction FXtract est une fonction de Hachage.

10. Procédé selon l'une quelconque des revendications 1 à 9, **caractérisé en ce que** le procédé comprend en outre, entre les étapes de déchiffrement (26) et de re-chiffrement (31), une étape de vérification (28, 29), au cours de laquelle une valeur témoin est recherchée dans les dites données ClearData (14, 15), et le procédé ne se poursuit que si (29) ladite valeur témoin est correctement trouvée.

11. Procédé selon l'une quelconque des revendications 4 à 10, **caractérisé en ce que** l'étape de re-chiffrement (31) de ladite donnée ClearData comprend en outre les étapes de :
- génération d'une nouvelle valeur V2 (32)
- association, par application de ladite fonction mathématique FAsso, dudit mot de passe MDP' (14) et de ladite valeur V2 (32) pour obtenir mot de passe dit parfait PerfectMDP'
- chiffrement desdites données ClearData (14, 15) avec ledit nouveau mot de passe parfait PerfectMDP' et ledit algorithme SYM pour obtenir un nouveau chiffré NewCryptData (33)
- enregistrement dudit nouveau chiffré NewCryptData (33), et ladite valeur V2 (32) dans la mémoire non volatile dudit dispositif électronique ST.

12. Procédé selon la revendication 11 **caractérisé en ce qu'**il comprend en outre une étape d'effacement de ladite valeur V1 et de dudit chiffré CryptData dans ladite mémoire non volatile (5) dudit dispositif ST (12).

13. Procédé selon la revendication 11 **caractérisé en ce que** ladite valeur V2 (32) est une valeur aléatoire.
